# EUROPÄISCHE PATENTSCHRIFT

(11) **EP 2 726 830 B1**
(45) Veröffentlichungstag und Bekanntmachung des Hinweises auf die Patenterteilung: **21.03.2018**
(21) Anmeldenummer: 12733632.9
(22) Anmeldetag: 26.06.2012
(51) Int. Cl.: G01J 3/42, G01N 21/31, G01N 30/74, G01N 21/35

(54) **GASCHROMATOGRAPH MIT ABSORPTION SPEKTROMETER UND VERFAHREN ZUR GASCHROMATOGRAPHISCHEN ANALYSE EINES GASGEMISCHS**
GAS CHROMATOGRAPH WITH ABSORPTION SPECTROMETER AND METHOD FOR ANALYZING A GAS MIXTURE PER GAS CHROMATOGRAPHY
CHROMATOGRAPHE EN PHASE GAZEUSE AVEC SPECTROMÈTRE D'ABSORPTION ET MÉTHODE D'ANALYSE D'UN MÉLANGE GAZEUX PAR CHROMATOGRAPHIE EN PHASE GAZEUSE

(30) Priorität: 28.06.2011 DE 102011078156
(43) Veröffentlichungstag der Anmeldung: 07.05.2014
(73) Patentinhaber: Siemens Aktiengesellschaft, 80333 München (DE)
(72) Erfinder: STRAUCH, Piotr, 76761 Rülzheim (DE)
(86) Internationale Anmeldenummer: PCT/EP2012/062302
(87) Internationale Veröffentlichungsnummer: WO 2013/000886

(56) Entgegenhaltungen:
- GB-A- 953 952
- US-A- 3 897 154
- US-A1- 2007 273 882
- ZYBIN A ET AL: "Element-selective detection in liquid and gas chromatography by diode laser absorption spectrometry", JOURNAL OF CHROMATOGRAPHY, ELSEVIER SCIENCE PUBLISHERS B.V, NL, Bd. 1050, Nr. 1, 24. September 2004 (2004-09-24), Seiten 35-44, XP004565628, ISSN: 0021-9673, DOI: 10.1016/J.CHROMA.2004.05.078
- LAGESSON-ANDRASKO L ET AL: "THE USE OF GAS-PHASE UV SPECTRA IN THE 168-330-NM WAVELENGTH REGIONFOR ANALYTICAL PURPOSES. 1. QUALITATIVE MEASUREMENTS", ANALYTICAL CHEMISTRY, AMERICAN CHEMICAL SOCIETY, US, Bd. 70, Nr. 5, 1. März 1998 (1998-03-01), Seiten 819-826, XP000750430, ISSN: 0003-2700, DOI: 10.1021/AC971009V
- E. S.YEUNG, W. G. KUHR: "Indirect detection methods for capillary separations", ANALYTICAL CHEMISTRY, Bd. 63, Nr. 5, 1. März 1991 (1991-03-01), Seiten 275A-282A, XP002683528,

## Beschreibung

Die Erfindung betrifft ein Verfahren zur gaschromatographischen Analyse eines Gasgemischs, wobei eine Probe des Gasgemischs mittels eines Trägergases durch eine chromatographische Trenneinrichtung geleitet wird und in einem nachgeordneten Absorptionsspektrometer mit wellenlängenabstimmbarer Lichtquelle getrennte Komponenten des Gasgemischs quantitativ bestimmt werden.

Die Erfindung betrifft ferner einen Gaschromatographen zur Durchführung eines solchen Verfahrens, bestehend aus einer chromatographischen Trenneinrichtung und einem, eine wellenlängenabstimmbare Lichtquelle enthaltenden nachgeordneten Absorptionsspektrometer zur quantitativen Bestimmung von getrennten Komponenten einer mittels eines Trägergases durch die Trenneinrichtung geführten Probe eines Gasgemischs.

Ein derartiger Gaschromatograph bzw. ein derartiges Verfahren sind aus der US 7,511,802 B2 bekannt. Bei dem bekannten Gaschromatographen bzw. Verfahren wird jede einzelne Komponente beim Verlassen der Trenneinrichtung über ein Umschaltventil in eine Analysenküvette des Absorptionsspektrometers eingeleitet. Das Licht der wellenlängenabstimmbaren Lichtquelle wird durch die Analysenküvette hindurch auf einen Photodetektor geleitet, wobei die Wellenlänge der Lichtquelle auf eine Absorptionslinie der zu bestimmenden Komponente abgestimmt wird. Die Lichtabsorption der Komponente ist von ihrer Konzentration in der Analysenküvette abhängig, so dass das von dem Photodetektor erzeugte Ausgangssignal ein Maß für diese Konzentration ist. Da die Lichtabsorption sehr schwach ist, wird der Lichtstrahl mittels Reflektion mehrfach durch die Analysenküvette geführt, bevor er auf den Photodetektor trifft. Nach jeder Bestimmung einer Komponente wird die Analysenküvette über das Umschaltventil mit dem Trägergas gespült. Unzureichend getrennte Komponenten können zusammen in die Analysenküvette geleitet und dort bestimmt werden, wenn sie nicht überlappende Absorptionslinien aufweisen, auf die die Wellenlänge der Lichtquelle abgestimmt werden kann. Bei überlappenden Absorptionslinien besteht die Möglichkeit, die Komponenten durch Gaswäsche zu trennen und dann einzeln der Analysenküvette zuzuführen. Als Trägergas kommen Stickstoff, Argon oder Helium in Frage, die nicht infrarotaktiv sind und somit nicht mit den Absorptionsspektren der zu bestimmenden Komponenten interferieren.

Aus A. Zybin et al.: "Element-selective detection in liquid and gas chromatography by diode laser absorption spectrometry", Journal of Chromatography A, 2004, 1050, 35-44, ist es bekannt, chromatographisch getrennte Komponenten einer, z. B. gasförmigen, Probe zu atomisieren und in der Probe enthaltene Elemente in einem Absorptionsspektrometer quantitativ zu bestimmen, wozu die Wellenlänge einer Laserdiode auf Absorptionslinien der zu bestimmenden Elemente abgestimmt wird.

Aus der GB 953,952 A ist es bekannt, eine Probe eines Gasgemischs mittels eines Trägergases durch eine chromatographische Trenneinrichtung zu leiten und die Konzentrationen der getrennten Komponenten unter Verwendung eines pneumatischen Strahlungsdetektors zu bestimmen, wobei jede Strahlung zur Anwendung gelangen kann, die in dem Trägergas nicht, in den nachzuweisenden Komponenten jedoch genügend stark absorbiert wird.

Aus der WO 2008/061949 A1 und WO 2011/026924 A1 ist jeweils ein Absorptionsspektrometer bekannt, bei dem die Analysenküvette in Form eines Hohlleiters ausgebildet ist, in dem sich das zu analysierende Gas befindet. Das Licht der Lichtquelle wird an einem Ende des Hohlleiters in diesen eingekoppelt und dem anderen Ende auf den Photodetektor ausgekoppelt. Das Licht wird in dem ggf. innenverspiegelten Hohlleiter durch Reflexion geführt, so dass der Hohlleiter gebogen und somit als Hohlfaser ausgebildet werden kann. Zur Reduzierung von Artefakten, wie Interferenzen, kann der Hohlleiter in Vibrationen versetzt werden. Der Vorteil dieses bekannten Absorptionsspektrometers liegt in dem geringen Messvolumen und der langen optischen Messstrecke.

In Verbindung mit der oben bereits genannten bekannten absorptionsspektrometrischen Bestimmung von zuvor gaschromatographisch getrennten Komponenten ergeben sich folgende Probleme:
- Mit den derzeit kommerziell erhältlichen wellenlängenabstimmbaren Lichtquellen, i. d. R. Laser oder Laserdioden, lässt sich nur eine eingeschränkte Anzahl von Gaskomponenten bestimmen, wobei z. B. Edelgase oder Stickstoff prinzipiell und höhere Kohlenwasserstoffe in der Praxis nicht messbar sind.
- Das Abstimmen der Lichtquelle auf die Absorptionslinien der unterschiedlichen Komponenten ist aufwendig und langsam.
- Die verwendeten Trägergase sind teuer.

Zur Lösung dieser Probleme ist gemäß der Erfindung vorgesehen, dass bei dem eingangs angegebenen Verfahren zur gaschromatographischen Analyse eines Gasgemischs die Wellenlänge der Lichtquelle auf eine Absorptionslinie des Trägergases abgestimmt wird und die quantitative Bestimmung der einzelnen Komponenten des Gasgemischs indirekt über eine Konzentrationsminderung des Trägergases erfolgt, bzw. dass bei dem eingangs angegebenen Gaschromatographen das Absorptionsspektrometer dazu ausgebildet ist, bei auf eine Absorptionslinie des Trägergases abgestimmter Wellenlänge der Lichtquelle die quantitative Bestimmung der einzelnen Komponenten des Gasgemischs indirekt über eine Konzentrationsminderung des Trägergases durchzuführen.

Da die Konzentrationen der einzelnen Komponenten nicht unmittelbar, sondern indirekt über die Konzentrationsminderung des Trägergases aufgrund der getrennten Komponenten gemessen werden, können auch Komponenten bestimmen werden, die selbst nicht unmittelbar absorptionsspektrometrisch messbar sind, weil z. B. ihre Absorptionslinien außerhalb des durchstimmbaren Wellenlängenbereichs des verwendeten Absorptionsspektrometers liegen. Üblicherweise werden Lichtquellen, i. d. R. Laser oder Laserdioden, mit im (nahen) Infrarotbereich durchstimmbaren Wellenlängen. Wenn die Absorptionslinie des Trägergases, auf die die Lichtquelle abgestimmt ist, mit den Absorptionsspektren einzelner Komponenten überlappt, kann die Bestimmung dieser Komponenten einfach an einer absorptionsspektrometrischen Bestimmung des Trägergases bei Abwesenheit von Komponenten des Gasgemischs, also z. B. zwischen zwei aufeinanderfolgenden und dabei ausreichend getrennten Komponenten oder beim Spülen des Gaschromatographen mit dem Trägergas, referenziert werden. Falls einzelne Komponenten nicht ausreichend getrennt werden können, kann die Wellenlänge der Lichtquelle zusätzlich auf eine Absorptionslinie der betreffenden Komponente abgestimmt werden. Davon abgesehen erfolgt die Messung der Komponenten sehr einfach und daher auch schnell, weil die Lichtquelle nur auf eine einzige Absorptionslinie, nämlich die des Trägergases, abgestimmt werden muss. Wenn die Lichtquelle einmal auf eine ausgewählte Absorptionslinie des Trägergases abgestimmt ist, braucht diese Wellenlänge nur noch in einem engen Bereich um die Mittenwellenlänge der Absorptionslinie moduliert zu werden, um die Lichtquelle auf die Mitte der Absorptionslinie zu stabilisieren.

Als Trägergas können insbesondere preiswerte Gase, wie z. B. Sauerstoff, Kohlendioxid oder Methan mit einer geeigneten Absorptionslinie verwendet werden. Dabei kann es sich um ein einzelnes Gas aber auch um ein Trägergasgemisch mit einer Gaskomponente handeln, die eine geeignete Absorptionslinie aufweist und deren Konzentration in dem Trägergasgemisch zumindest während jedes Messzyklus konstant ist. Daher kann wegen des konstanten Sauerstoffgehalts von etwa 21% in besonders vorteilhafter Weise Luft als Trägergas verwendet werden. Im Übrigen kann das ausgewählte Trägergas auch dann verwendet werden, wenn es selbst als Komponente des zu analysierenden Gasgemischs gemessen werden soll. In diesem Fall kann zur Bestimmung der trägergasgleichen Komponente anstelle des aus der Trenneinrichtung kommenden Trägergases mit den getrennten Komponenten eine weitere ungetrennte Probe des Gasgemischs in das Absorptionsspektrometer eingeleitet werden. Dazu ist lediglich ein steuerbares Umschaltventil zwischen der Trenneinrichtung und dem Absorptionsspektrometer erforderlich.

Vorzugsweise weist das Absorptionsspektrometer einen von dem Trägergas mit den getrennten Komponenten durchströmten Hohlleiter auf, wobei die Lichtquelle und ein Photodetektor in Bezug auf den Hohlleiter derart angeordnet sind, dass das Licht der Lichtquelle nach Durchstrahlen des Hohlleiters in dessen Längsrichtung auf den Photodetektor fällt. Zu Einzelheiten und mögliche Ausgestaltungen des Aufbaus des Hohlleiters und der Ein- und Auskopplung des Lichts und des Trägergases in bzw. aus dem Hohlleiter wird auf die oben genannten WO 2008/061949 A1 und WO 2011/026924 A1 verwiesen. Im Unterschied zu dem aus der US 7,511,802 B2 bekannten Gaschromatograph wird das Trägergas mit den getrennten Komponenten vorzugsweise kontinuierlich durch den Hohlleiter geführt, dessen Innendurchmesser bevorzugt zumindest annähernd dem Innendurchmesser der Trenneinrichtung entspricht. Die getrennten Komponenten durchlaufen dann ohne Störung ihrer Form (Peak) den Hohlleiter und werden von dem Absorptionsspektrometer abgetastet. Die Abtastung entspricht dabei einem Kurzeitintegral über den Peak mit einer dem von dem Trägergas mit den getrennten Komponenten durchströmten und zugleich von dem Licht durchstrahlten Längenabschnitt des Hohlleiters entsprechenden Fensterlänge. Aus der zeitlichen Änderung des von dem Photodetektor erzeugten Ausgangssignals kann der Verlauf des Peaks detektiert werden. Wenn, entsprechend einer vorteilhaften Ausführung der Erfindung, der von dem Trägergas mit den getrennten Komponenten durchströmte und zugleich von dem Licht durchstrahlte Längenabschnitt des Hohlleiters zumindest annähernd der größten zu erwartenden Peakbreite der getrennten Komponenten entspricht, kann, sobald sich der Peak vollständig in dem Hohlleiter befindet, mit einer einzigen Messung die zur Konzentration der Komponente proportionale Peakfläche bestimmt werden.

Im Weiteren wird die Erfindung unter Bezugnahme auf die Figuren der Zeichnung anhand von Ausführungsbeispielen erläutert; im Einzelnen zeigen
- Figur 1: eine schematische Darstellung des erfindungsgemäßen Gaschromatographen,
- Figur 2: ein modifiziertes Ausführungsbeispiel des in Figur 1 gezeigten Gaschromatographen.
- Figur 3: ein Chromatogramm und Beispiele zur Ansteuerung der wellenlängenabstimmbare Lichtquelle,
- Figur 4: ein Ausführungsbeispiel für das Absorptionsspektrometer mit einem Hohlleiter als Analysenküvette und
- Figur 5: ein Beispiel für die Lichteinkopplung in den Hohlleiter.

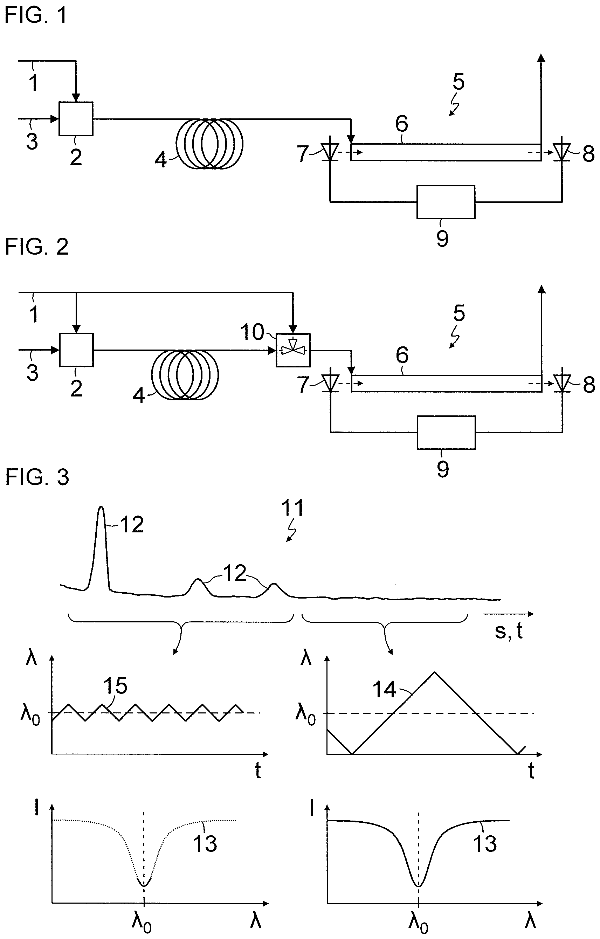

Figur 1 zeigt einen Prozess-Gaschromatographen zur Analyse eines Gasgemischs 1, das nach Entnahme aus einem technischen Prozess einer Dosiereinrichtung 2 zugeführt wird. Die Dosiereinrichtung 2 dient dazu, zu einem vorgegebenen Zeitpunkt eine vorgegebene Dosiermenge des Gasgemischs 1 in Form eines kurzen und scharf begrenzten Probenpfropfes, im Folgenden Probe genannt, in einen Trägergasstrom 3 einzuschleusen und einer Trenneinrichtung 4 in Form einer Trennsäule oder Trennsäulenschaltung zuzuführen. Die Trenneinrichtung 4 trennt die in der Probe enthaltenen Komponenten des Gasgemischs 1 entsprechend ihren Retentionszeiten, so dass die Komponenten am Ausgang der Trenneinrichtung 4 nacheinander erscheinen.

Am Ausgang der Trenneinrichtung 4 ist ein Absorptionsspektrometer 5 zur Detektion und quantitativen Bestimmung der getrennten Komponenten angeordnet. Das Absorptionsspektrometer 5 weist dazu eine von dem Trägergas 3 mit den getrennten Komponenten durchströmte Analysenküvette 6 auf, durch die hindurch das Licht einer wellenlängenabstimmbaren Lichtquelle 7, z. B. einer Laserdiode, auf einen Photodetektor 8 geleitet wird. Eine Steuer- und Auswerteeinrichtung 9 steuert die Lichtquelle 7 und wertet das von dem Photodetektor 8 gelieferte Ausgangssignal aus.

Bei dem Trägergas 3 handelt es sich um ein einzelnes Gas oder ein Trägergasgemisch mit einer Gaskomponente in zumindest während des Messzyklus gleichbleibender Konzentration, wie z. B. Luft bzw. Luftsauerstoff. Die Wellenlänge der Lichtquelle 7 wird auf eine Absorptionslinie des Trägergases 3 bzw. der Gaskomponente in dem Trägergasgemisch abgestimmt, so dass das Absorptionsspektrometer 5 die Konzentrationen der getrennten Komponenten indirekt über die Konzentrationsminderung des Trägergases 3 aufgrund dieser Komponenten misst. Damit können auch Komponenten des Gasgemischs 1 bestimmt werden, deren Absorptionslinien außerhalb des durchstimmbaren Wellenlängenbereichs der Lichtquelle 7 liegen.

Figur 2 zeigt eine Erweiterung des Gaschromatographen mit einem steuerbaren Umschaltventil 10 zwischen der Trenneinrichtung 4 und dem Absorptionsspektrometer 5. Enthält das Gasgemisch 1 eine mit dem Trägergas 3 (bzw. der oben erwähnten Komponente des Trägergasgemischs) identische Komponente, hier z. B. Sauerstoff, so wird zur quantitativen Bestimmung dieser Komponente das Gasgemisch 1 über das Umschaltventil 10 unmittelbar, d. h. ohne chromatographische Trennung, dem Absorptionsspektrometer 5 so lange zugeführt bis die Analysenküvette 6 vollständig mit dem Gasgemisch 1 gefüllt ist.

Figur 3 zeigt im oberen Teil ein Beispiel für ein Chromatogramm 11, bei dem die zeitlich und örtlich getrennten Komponenten des Gasgemischs 1 als Peaks 12 erscheinen. Die Flächen unter den Peaks 12 entsprechen jeweils den Konzentrationen der zugehörigen Komponenten. Im unteren Teil der Figur ist die Absorptionslinie 13 des Trägergases 3 gezeigt, auf die die Wellenlänge λ der Lichtquelle 7 abgestimmt wird. Die Absorptionslinie 13 gibt hier die wellenlängenabhängige Intensität I des auf den Photodetektor 8 fallenden, d. h. von dem Trägergas 3 nicht absorbierten Lichts wieder. Wenn sich keine Komponenten des Gasgemischs 1 in der Analysenküvette 6 des Absorptionsspektrometers 5 befinden, hier also im rechten Teil des Chromatogramms 11 oder wenn der Chromatograph bzw. die Analysenküvette 6 mit dem Trägergas 3 gespült werden, wird die Wellenlänge λ der Lichtquelle 7 über einen vergleichsweise großen Wellenlängenbereich moduliert (Modulationsfunktion 14), um die Mittenwellenlänge λ₀ der Absorptionslinie 12 zu finden. Ist die Lichtquelle 7 einmal auf die Mittenwellenlänge λ₀ der Absorptionslinie 13 abgestimmt, braucht die Wellenlänge λ nur noch in einem engen Bereich um die Mittenwellenlänge λ₀ moduliert zu werden (Modulationsfunktion 15), um die Lichtquelle 7 auf die Mitte der Absorptionslinie 13 zu stabilisieren. Aufgrund des kleineren abzutastenden Wellenlängenbereichs ist die Abtastzeit bei der Modulationsfunktion 15 mit kleiner Amplitude wesentlich kürzer als bei der Modulationsfunktion 14 mit großer Amplitude. Die Bestimmung der Komponenten des Gasgemischs 1 kann daher mit hoher Geschwindigkeit und damit hoher zeitlicher bzw. örtlicher Auflösung erfolgen, weil die Lichtquelle 7 während der Analyse sämtlicher gaschromatographisch getrennter Komponenten des Gasgemischs 1 nur auf der einen ausgewählten Absorptionslinie 13 des Trägergases 3 stabilisiert werden muss.

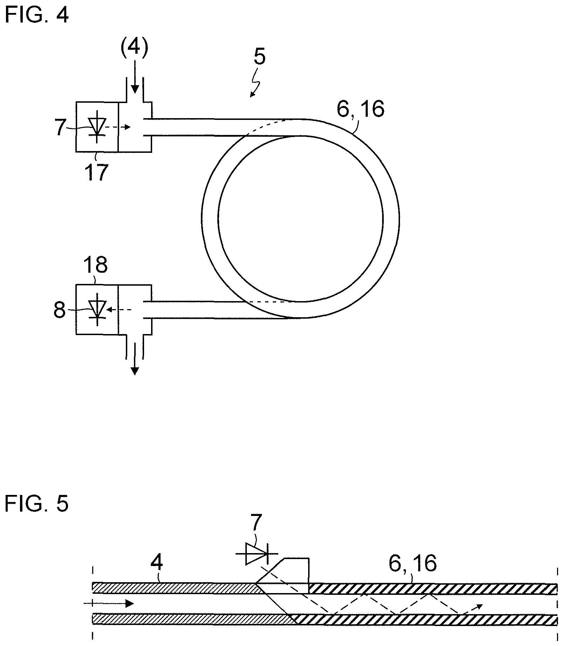

Figur 4 zeigt ein Ausführungsbeispiel des Absorptionsspektrometers 5, bei dem die Analysenküvette 6 als Hohlleiter 16, insbesondere als biegsame Hohlfaser, ausgebildet ist. Das Licht der Lichtquelle 7 wird in das eine Ende des Hohlleiters 16 eingekoppelt und in diesem durch Reflexion an der vorzugsweise verspiegelten Innenwand zu dem Photodetektor 8 am anderen Ende des Hohlleiters 16 geführt. Zugleich wird der Hohlleiter 16 von dem aus der Trenneinrichtung 4 kommenden Trägergas 3 mit den getrennten Komponenten des Gasgemischs 1 durchströmt. Die Lichtquelle 7 und/oder der Photodetektor 8 können in mit Nullgas oder dem Trägergas 3 gefüllten Kammern 17, 18 angeordnet sein. Die Länge des Hohlleiters 16 ist derart bemessen, dass sie in etwa der größten zu erwartenden Peakbreite der getrennten Komponenten entspricht. Aus der zeitlichen Änderung des von dem Photodetektor 8 erzeugten Ausgangssignals kann die Position des Peaks 12 (Figur 3) einer in den Hohlleiter 16 gelangenden Komponente detektiert werden. Sobald sich der Peak 12 vollständig in dem Hohlleiter 16 befindet, kann mit einer einzigen Messung die zur Konzentration der Komponente proportionale Peakfläche bestimmt werden.

Figur 5 zeigt in schematischer Darstellung ein Beispiel für eine von der Seite her erfolgende Einkopplung des Lichts der Lichtquelle 7 in den Hohlleiter 16. An der Stelle der Lichteinkopplung ist der Mantel des Hohlleiters 16 transparent. Die Trenneinrichtung 4 geht unmittelbar in den Hohlleiter 16 über, dessen Innendurchmesser zumindest annähernd dem Innendurchmesser der Trenneinrichtung 4 entspricht. Dadurch wird erreicht dass die Peaks 12 (Figur 3) der getrennten Komponenten ungestört in den Hohlleiter 16 gelangen und dort gemessen werden können.

## Patentansprüche

1. Verfahren zur gaschromatographischen Analyse eines Gasgemischs (1), wobei eine Probe des Gasgemischs (1) mittels eines Trägergases (3) durch eine chromatographische Trenneinrichtung (4) geleitet wird und in einem nachgeordneten Absorptionsspektrometer (5) mit wellenlängenabstimmbarer Lichtquelle (7) getrennte Komponenten des Gasgemischs (1) quantitativ bestimmt werden, **dadurch gekennzeichnet, dass** die Wellenlänge (λ) der Lichtquelle (7) auf eine Absorptionslinie (13) des Trägergases (3) abgestimmt wird und dass die quantitative Bestimmung der einzelnen Komponenten des Gasgemischs (1) indirekt über eine Konzentrationsminderung des Trägergases (3) erfolgt.

2. Verfahren nach Anspruch 1, **dadurch gekennzeichnet, dass** als Trägergas (3) ein Trägergasgemisch mit einer Gaskomponente verwendet wird, deren Konzentration in dem Trägergasgemisch zumindest während der Messung konstant ist, und dass die Wellenlänge (λ) der Lichtquelle (7) auf eine Absorptionslinie (13) dieser Gaskomponente abgestimmt wird.

3. Verfahren nach Anspruch 1 oder 2, **dadurch gekennzeichnet, dass** bei Abwesenheit von Komponenten des Gasgemischs (1) in dem Absorptionsspektrometer (5) die Lichtabsorption des Trägergases (3) gemessen und zur Referenzierung der quantitativen Bestimmung der Komponenten herangezogen wird.

4. Verfahren nach Anspruch 1, 2 oder 3, **dadurch gekennzeichnet, dass** das Trägergas (3) mit den getrennten Komponenten in dem Absorptionsspektrometer (5) kontinuierlich durch einen Hohlleiter (16) geführt wird und dass das Licht der Lichtquelle (7) in Längsrichtung des Hohlleiters (16) durch diesen hindurch auf einen Photodetektor (8) geleitet wird.

5. Verfahren nach einem der vorangehenden Ansprüche, **dadurch gekennzeichnet, dass** zur Bestimmung mindestens einer aber nicht aller Komponenten die Wellenlänge (λ) der Lichtquelle (7) zusätzlich auf eine Absorptionslinie der betreffenden Komponente abgestimmt wird.

6. Verfahren nach einem der vorangehenden Ansprüche, **dadurch gekennzeichnet, dass** zur Bestimmung einer trägergasgleichen Komponente des zu analysierenden Gasgemischs (1) anstelle des aus der Trenneinrichtung (4) kommenden Trägergases (3) mit den getrennten Komponenten eine weitere ungetrennte Probe des Gasgemischs (1) in das Absorptionsspektrometer (5) eingeleitet wird.

7. Gaschromatograph zur Durchführung des Verfahrens nach Anspruch 1, bestehend aus einer chromatographischen Trenneinrichtung (4) beinhaltend eine Quelle von einem Trägergas (3), aus einem, eine wellenlängenabstimmbare Lichtquelle (7) enthaltenden nachgeordneten Absorptionsspektrometer (5) zur quantitativen Bestimmung von getrennten Komponenten einer mittels des Trägergases (3) durch die Trenneinrichtung (4) geführten Probe eines Gasgemischs (1), und aus einer Steuer- und Auswerteeinrichtung (9), **dadurch gekennzeichnet, dass** das Absorptionsspektrometer (5) und die Steuer- und Auswerteeinrichtung (9) dazu ausgebildet sind, bei auf eine Absorptionslinie (13) des Trägergases (3) abgestimmter Wellenlänge (λ) der Lichtquelle (7) die quantitative Bestimmung der einzelnen Komponenten des Gasgemischs (1) indirekt über eine Konzentrationsminderung des Trägergases (3) durchzuführen.

8. Gaschromatograph nach Anspruch 7, **dadurch gekennzeichnet, dass** das Absorptionsspektrometer (5) einen von dem Trägergas (3) mit den getrennten Komponenten durchströmten Hohlleiter (16) aufweist und dass die Lichtquelle (7) und ein Photodetektor (8) in Bezug auf den Hohlleiter (16) derart angeordnet sind, dass das Licht der Lichtquelle (7) nach Durchstrahlen des Hohlleiters (16) in dessen Längsrichtung auf den Photodetektor (8) fällt.

9. Gaschromatograph nach Anspruch 8, **dadurch gekennzeichnet, dass** der Hohlleiter (16) einen Innendurchmesser aufweist, der zumindest annähernd dem Innendurchmesser der Trenneinrichtung (4) entspricht.

10. Gaschromatograph nach Anspruch 8 oder 9, **dadurch gekennzeichnet, dass** der Hohlleiter (16) innenverspiegelt ist.

11. Gaschromatograph nach Anspruch 8, 9 oder 10, **dadurch gekennzeichnet, dass** die Länge des Hohlleiters (16) derart bemessen ist, dass der von dem Trägergas (3) mit den getrennten Komponenten durchströmte und zugleich von dem Licht durchstrahlte Längenabschnitt des Hohlleiters (16) zumindest annähernd der größten zu erwartenden Peakbreite der getrennten Komponenten entspricht.

12. Gaschromatograph nach einem der Ansprüche 7 bis 11, **dadurch gekennzeichnet, dass** zwischen der Trenneinrichtung (4) und dem Absorptionsspektrometer (5) ein steuerbares Umschaltventil (10) zur wahlweisen Einleitung des aus der Trenneinrichtung (4) kommenden Trägergases (3) mit den getrennten Komponenten oder einer weiteren ungetrennten Probe des Gasgemischs (1) in das Absorptionsspektrometer (5) angeordnet ist.

## Claims

1. Method for analysing a gas mixture (1) by means of gas chromatography, wherein a sample of the gas mixture (1) is passed through a chromatographic separating device (4) by means of a carrier gas (3) and separated components of the gas mixture (1) are quantitatively determined in a downstream absorption spectrometer (5) having a wavelength-tunable light source (7), **characterized in that** the wavelength (λ) of the light source (7) is tuned to an absorption line (13) of the carrier gas (3), and **in that** the quantitative determination of the individual components of the gas mixture (1) is carried out indirectly by means of a concentration reduction of the carrier gas (3).

2. Method according to Claim 1, **characterized in that** a carrier gas mixture having a gas component whose concentration in the carrier gas mixture is constant at least during the measurement is used as the carrier gas (3), and **in that** the wavelength (λ) of the light source (7) is tuned to an absorption line (13) of this gas component.

3. Method according to Claim 1 or 2, **characterized in that** the light absorption of the carrier gas (3) is measured in the absence of components of the gas mixture (1) in the absorption spectrometer (5), and is used for referencing the quantitative determination of the components.

4. Method according to Claim 1, 2 or 3, **characterized in that** the carrier gas (3) with the separated components is conveyed continuously through a waveguide (16) in the absorption spectrometer (5), and **in that** the light of the light source (7) is passed through the waveguide (16) in the longitudinal direction of the latter onto a photodetector (8).

5. Method according to one of the preceding claims, **characterized in that** in order to determine at least one but not all components, the wavelength (λ) of the light source (7) is additionally tuned to an absorption line of the relevant component.

6. Method according to one of the preceding claims, **characterized in that** in order to determine a component, equivalent to the carrier gas, of the gas mixture (1) to be analysed, a further, unseparated sample of the gas mixture (1) is introduced into the absorption spectrometer (5) instead of the carrier gas (3) coming from the separating device (4) with the separated components.

7. Gas chromatograph for carrying out the method according to Claim 1, consisting of a chromatographic separating device (4) containing a source of a carrier gas (3), consisting of a downstream absorption spectrometer (5), containing a wavelength-tunable light source (7), for quantitative determination of separated components of a sample of a gas mixture (1) conveyed through the separating device (4) by means of the carrier gas (3), and consisting of a control and evaluation device (9), **characterized in that** the absorption spectrometer (5) and the control and evaluation device (9) are formed so as to carry out the quantitative determination of the individual components of the gas mixture (1) indirectly, by means of a concentration reduction of the carrier gas (3), when the wavelength (λ) of the light source (7) is tuned to an absorption line (13) of the carrier gas (3).

8. Gas chromatograph according to Claim 7, **characterized in that** the absorption spectrometer (5) has a waveguide (16) through which the carrier gas (3) with the separated components flows, and **in that** the light source (7) and a photodetector (8) are arranged with respect to the waveguide (16) in such a way that the light of the light source (7) strikes the photodetector (8) after shining through the waveguide (16) in the longitudinal direction of the latter.

9. Gas chromatograph according to Claim 8, **characterized in that** the waveguide (16) has an internal diameter which corresponds at least approximately to the internal diameter of the separating device (4).

10. Gas chromatograph according to Claim 8 or 9, **characterized in that** the waveguide (16) is internally mirrored.

11. Gas chromatograph according to Claim 8, 9 or 10, **characterized in that** the length of the waveguide (16) is dimensioned in such a way that the length section of the waveguide (16) through which the carrier gas (3) with the separated components flows, and through which the light simultaneously shines, corresponds at least approximately to the greatest peak width to be expected for the separated components.

12. Gas chromatograph according to one of Claims 7 to 11, **characterized in that** a controllable switchover valve (10) for selective introduction of the carrier gas (3) coming from the separating device (4) with the separated components or a further, unseparated sample of the gas mixture (1) into the absorption spectrometer (5) is arranged between the separating device (4) and the absorption spectrometer (5).

## Revendications

1. Procédé d'analyse par chromatographie en phase gazeuse d'un mélange (1) gazeux, dans lequel on envoie un échantillon du mélange (1) gazeux, au moyen d'un gaz (3) porteur, dans un dispositif (4) chromatographique de séparation et l'on détermine quantitativement des constituants du mélange (1) gazeux séparés dans un spectromètre (5) d'absorption en aval, ayant une source (7) lumineuse pouvant être accordée en longueur d'onde, **caractérisé en ce que** l'on accorde la longueur d'onde (λ) de la source (7) lumineuse à une raie (13) d'absorption du gaz (3) porteur et **en ce que** la détermination quantitative des divers constituants du mélange (1) gazeux s'effectue indirectement par une diminution de la concentration du gaz (3) porteur.

2. Procédé suivant la revendication 1, **caractérisé en ce que** l'on utilise, comme gaz (3) porteur, un mélange de gaz porteur ayant un constituant gazeux dont la concentration dans le mélange de gaz porteur est constante, au moins pendant la mesure, et **en ce que** l'on accorde la longueur d'onde (λ) de la source (7) lumineuse à une raie (13) d'absorption de ce constituant gazeux.

3. Procédé suivant la revendication 1 ou 2, **caractérisé en ce qu'**en l'absence de constituants du mélange (1) gazeux, on mesure, dans le spectromètre (5) d'absorption, l'absorption de lumière du gaz (3) porteur et on en tire parti pour référencer la détermination quantitative des constituants.

4. Procédé suivant la revendication 1, 2 ou 3, **caractérisé en ce que** l'on fait passer, par un guide d'onde (16) en continue dans le spectromètre (5) d'absorption, le gaz (3) porteur avec les constituant séparés et **en ce que** l'on envoie, sur un photodétecteur (8) la lumière de la source (7) lumineuse, passant dans le guide d'onde (16) dans la direction longitudinale.

5. Procédé suivant l'une des revendications précédentes, **caractérisé en ce que**, pour déterminer au moins un, mais non tous les constituants, l'on accorde la longueur d'onde (λ) de la source (7) lumineuse supplémentairement à une raie d'absorption du constituant concerné.

6. Procédé suivant l'une des revendications précédentes, **caractérisé en ce que**, pour déterminer un constituant analogue au gaz porteur du mélange (1) gazeux à analyser, l'on fait passer, dans le spectromètre (5) d'absorption, au lieu du gaz (3) porteur arrivant du dispositif (4) de séparation avec les constituants séparés, un autre échantillon non séparé du mélange (1) gazeux.

7. Chromatographe en phase gazeuse pour effectuer le procédé suivant la revendication 1, constitué d'un dispositif (4) chromatographique de séparation, comportant une source d'un gaz (3) porteur, d'un spectromètre (5) d'absorption en aval, contenant une source (7) lumineuse accordable en longueur d'onde, pour déterminer quantitativement des constituants séparés d'un échantillon, envoyé au moyen du gaz (3) porteur dans le dispositif (4) de séparation, d'un mélange (1) gazeux et d'un dispositif (9) de commande et d'exploitation, **caractérisé en ce que** le spectromètre (5) d'absorption et le dispositif (9) de commande et d'exploitation sont constitués pour effectuer, indirectement par une diminution de la concentration du gaz (3) porteur, la détermination quantitative des divers constituants du mélange (1) gazeux à une longueur d'onde (λ) de la source (7) lumineuse accordée à une raie (13) d'absorption du gaz (3) porteur.

8. Chromatographe en phase gazeuse suivant la revendication 7, **caractérisé en ce que** le spectromètre (5) d'absorption a un guide d'onde (16) dans lequel passe le gaz (3) porteur avec les constituants séparés et **en ce que** la source (7) lumineuse et un photodétecteur (8) sont disposés, par rapport au guide d'onde (16), de manière à ce que la lumière de la source (7) lumineuse arrive sur le photodétecteur (8) après être passée dans le guide d'onde (16) dans sa direction longitudinale.

9. Chromatographe en phase gazeuse suivant la revendication 8, **caractérisé en ce que** le guide d'onde (16) a un diamètre intérieur, qui correspond au moins à peu près au diamètre intérieur du dispositif (4) de séparation.

10. Chromatographe en phase gazeuse suivant la revendication 8 ou 9, **caractérisé en ce que** le guide d'onde (16) est réfléchissant intérieurement.

11. Chromatographe en phase gazeuse suivant la revendication 8, 9 ou 10, **caractérisé en ce que** la longueur du guide d'onde (16) est telle que le tronçon en longueur du guide d'onde (16), parcouru par le gaz (3) porteur avec les constituants séparés et en même temps par la lumière, correspond au moins à peu près à la largeur de crête escomptée la plus grande des constituants séparés.

12. Chromatographe en phase gazeuse suivant l'une des revendications 7 à 11, **caractérisé en ce qu'**entre le dispositif (4) de séparation et le spectromètre (5) d'absorption, est montée une soupape (10) d'inversion pouvant être commandée pour envoyer au spectromètre (5) d'absorption, au choix, le gaz (3) porteur arrivant du dispositif (4) de séparation avec les constituants séparés ou un autre échantillon non séparé du mélange (1) gazeux.
